(19) Europäisches Patentamt
European Patent Office
Office européen des brevets

(11) **EP 3 434 877 B1**

(12) **EUROPEAN PATENT SPECIFICATION**

(45) Date of publication and mention
of the grant of the patent:
**23.03.2022 Bulletin 2022/12**

(21) Application number: **18181316.3**

(22) Date of filing: **03.07.2018**

(51) International Patent Classification (IPC):
*F02C 7/22* (2006.01)    *F02C 9/26* (2006.01)
*F02C 9/34* (2006.01)    *F01D 21/00* (2006.01)
*F23R 3/34* (2006.01)    *G01M 15/14* (2006.01)

(52) Cooperative Patent Classification (CPC):
**F01D 21/003; F02C 7/222; F02C 9/263; F02C 9/34;
F23N 5/242; F23R 3/28; F23R 3/346; G01M 15/14;**
F05D 2260/80; F05D 2270/14; F05D 2270/301;
F05D 2270/303; F05D 2270/306; F05D 2270/31;
F05D 2270/334;        (Cont.)

(54) **DETERMINATION OF A FUEL DELIVERY FAULT IN A GAS TURBINE ENGINE**

BESTIMMUNG EINES KRAFTSTOFFABGABEFEHLERS IN EINEM GASTURBINENTRIEBWERK

DÉTERMINATION D'UN DÉFAUT DE DISTRIBUTION DE CARBURANT DANS UN MOTEUR À TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.07.2017 GB 201712142**

(43) Date of publication of application:
**30.01.2019 Bulletin 2019/05**

(73) Proprietor: **Rolls-Royce plc
London N1 9FX (GB)**

(72) Inventors:
• **Muldal, Carl
Derby, Derbyshire DE24 8BJ (GB)**
• **King, Stephen
Derby, Derbyshire DE24 8BJ (GB)**
• **Rimell, Andrew
Derby, Derbyshire DE24 8BJ (GB)**

(74) Representative: **Rolls-Royce plc
Intellectual Property Dept SinA-48
PO Box 31
Derby DE24 8BJ (GB)**

(56) References cited:
EP-A1- 2 886 958     WO-A1-2013/077861
US-A1- 2004 079 070     US-A1- 2016 326 967
US-B2- 8 200 410

(52) Cooperative Patent Classification (CPC): (Cont.)
F05D 2270/44; F05D 2270/71; F23N 2225/16;
F23N 2241/20; F23R 2900/00013

**Description**

Field of the Present Disclosure

The present disclosure relates to determination of a fuel delivery fault in a gas turbine engine.

Background

Multi-stage combustors are used particularly in lean burn fuel systems of gas turbine engines to reduce unwanted emissions while maintaining thermal efficiency and flame stability. For example, duplex fuel injectors have pilot and mains fuel manifolds feeding pilot and mains discharge orifices of the injectors. At low power conditions only the pilot stage is activated, while at higher power conditions both pilot and mains stages are activated. The fuel for the manifolds typically derives from a pumped and metered supply. A splitter unit can then be provided to selectively split the metered supply between the manifolds as required for a given staging condition.

A typical annular combustor has a circumferential arrangement of fuel injectors, each associated with respective pilot and mains feeds extending from the circumferentially extending pilot and mains manifolds. Each injector generally has a nozzle forming the discharge orifices which discharge fuel into the combustion chamber of the combustor, a feed arm for the transport of fuel to the nozzle, and a head at the outside of the combustor at which the pilot and mains feeds enter the feed arm. Within the injectors, a control valve, often of a type known as a flow scheduling valve (FSV), is typically associated with each feed in order to retain a primed manifold when de-staged and at shut-down. The FSVs also prevent fuel flow into the injector nozzle when the supply pressure is less than the cracking pressure (i.e. less than a given difference between manifold pressure and combustor gas pressure).

Multi-stage combustors may have further stages and/or manifolds. For example, the pilot manifold may be split into two manifolds for lean blow-out prevention during rapid engine decelerations.

During pilot-only operation, the splitter unit directs fuel for burner flow only through the pilot fuel circuit (i.e. pilot manifold and feeds). It is therefore conventional to control temperatures in the de-staged (i.e. mains) fuel circuit to prevent coking due to heat pick up from the hot engine casing. One known approach, for example described in EP A 2469057, is to provide a separate recirculation manifold which is used to keep the fuel in the mains manifold cool when it is deselected. It does this by keeping the fuel in the mains manifold moving, although a cooling flow also has to be maintained in the recirculation manifold during mains operation to avoid coking.

However, a problem associated with this approach is how to accommodate a mains control valve malfunction. For example, carbon deposition caused by hot fuel being stagnant or flowing at a low velocity around an FSV can cause increased stiction in the FSV, leading to it either under or over-scheduling the fuel supply to the combustor. In pilot-only operation, when cooling flow is passing through the mains manifold, an FSV failing to an open condition can cause hot streaks which may lead to nozzle and turbine damage. In pilot and mains operation, such a failure can produce a drop in mains manifold pressure which causes other mains control valves to close. A possible outcome is again hot streaks leading to nozzle and turbine damage.

US 2016/0245524 proposes a combustion staging system having one or more fuel pressure sensors which detect the pressure of the cooling flow on the recirculation line, and a control arrangement which is adapted to close off the recirculation line when the pressure sensors indicates a failure of the cooling flow. However, this proposal is only applicable to combustion staging system architectures which include a recirculation line, and there are ongoing efforts to remove the recirculation line from staging system at least for cost/weight reasons.

Moreover, the proposal of US 2016/0245524 determines if there is a fuel system fault, rather than a fault with a specific FSV or fuel injector (e.g. a fuel passage blockage or valve stiction failure). Also, the proposal focuses on monitoring whether the recirculation line is leaking fuel into the mains manifold causing over-fuelling, which is only one possible failure mode, albeit an important one in the context of lean burn fuel system architectures. For example, the proposal cannot identify a fault associated with a pilot manifold.

Another known approach to fault detection is to monitor for hot streaks using a turbine gas temperature monitoring system. In such a system, the temperature profile of the hot gases from the combustor used to drive the turbine is measured by an array of sensors, such as thermocouples. These can be arranged in one or more parallel groups to form one or sensor ladders, as proposed in US 2009/046762 and US 9297707. S. King et al., Anomaly Detection of Combustor Systems in Support of Unmanned Air Vehicle Applications, pages 694-705, 6th International Conference on Condition Monitoring and Machinery Failure Prevention Technologies 2009, vol. 2 proposes a neural network-based analysis of turbine gas temperature profiles for the detection of combustion abnormalities. However, it can be difficult to causally link such abnormalities with specific fuel system faults rather than more general problems with the combustor.

US patent publication US2004079070 discloses a system for detecting gas turbine engine hot section condition using temperature measurements during engine operation. The system comprises a sensing unit for sensing a temperature distribution across a hot combustion gas stream generated by a gas turbine engine combustor. A signal processor receives temperature signals from the sensing unit and generates a combustor malfunction signal when the difference between a maximal temperature and a minimal temperature of the sensed temperature distribution is greater than a predetermined acceptable delta value.

US patent US8200410 discloses a method of actively controlling pattern factor in a gas turbine engine. The method includes the steps of issuing fuel into a combustion chamber of a gas turbine engine through one or more circumferentially disposed fuel injectors, determining an initial circumferential pattern factor in the combustion chamber, and adjusting fuel flow through one or more selected fuel injectors based on the initial circumferential pattern factor, to yield a modified circumferential pattern factor in the combustion chamber. The step of determining the circumferential pattern factor can include the steps of detecting a chemiluminescent signature within the combustor, correlating the chemiluminescent signature to an equivalence ratio, and computing the initial circumferential pattern factor based on the equivalence ratio. Alternatively, the step of determining the circumferential pattern factor can include the steps of measuring temperatures at a plurality of circumferential positions at the combustor exit and computing the initial circumferential pattern factor based on the measured temperatures.

In EP 2886958 an integrated monitoring and control system controller correlates sensor readings with combustion thermoacoustic properties in order to identify combustion anomalies by wavelet or Fourier analysis techniques; determine bulk temperature characteristics within the combustor with dominant mode frequency analysis techniques; and optionally determines absolute active path temperatures within the combustor with acoustic pyrometry transmission and time-offlight analysis techniques. I

Summary

There is thus a need for an improved approach for determining gas turbine engine fuel delivery faults.

Accordingly, in a first aspect, according to the features of claim 1, the present disclosure provides a method of determining a fue delivery fault in a gas turbine engine having a combustor, a combustor fuel system for delivering fuel to the combustor, and a turbine which is driven by hot gas from the combustor, the method including:

measuring a turbine gas temperature profile, predicting a turbine gas temperature profile and comparing the measured turbine gas temperature profile against the predicted turbine gas temperature profile;
measuring a combustor instability, predicting a combustor instability and comparing the measured combustor instability against the predicted combustor instability; and
indicating that a fuel delivery fault in the combustor fuel system has been detected when both the measured turbine gas temperature profile and the measured combustor instability differ from their predicted values by more than respective predetermined thresholds.

Advantageously, the method combines monitoring of both turbine gas temperature profile and combustor instability such that an anomaly in turbine gas temperature profile can be correlated to a change in combustor instability and hence the cause of a fault can be determined.

In a second aspect, according to the features of claim 11, the present disclosure provides a health monitoring system comprising

a data processing arrangement comprising one or more processors adapted to perform the method of the first aspect;
an array of temperature sensors for obtaining the measured turbine gas temperature profile; and
one or more sensors for use in obtaining the measured combustor instability.

In a third aspect, according to the features of claim 12, the present disclosure provides a gas turbine engine having the health monitoring system of the previous aspect.

The method is typically computer-implemented. Accordingly, further aspects of the present disclosure provide: according to claim 13, a computer program comprising code which, when the code is executed on the data processing arrangement of the gas turbine engine of the third aspect, causes the one or more processors to perform the method of the first aspect; and according to claim 14, a computer readable medium storing a computer program comprising code which, when the code is executed on the data processing arrangement of the gas turbine engine of the third aspect causes the one or more processors to perform the method of the first aspect.

For example, a data processing arrangement can be provided for determining a fuel delivery fault in a gas turbine engine having a combustor, a combustor fuel system for delivering fuel to the combustor, and a turbine which is driven by hot gas from the combustor, the system including: one or more processors configured to: compare a measured turbine gas temperature profile against a predicted turbine gas temperature profile; compare a measured combustor instability against a predicted combustor instability; and indicate that a fuel delivery fault in the combustor fuel system has been detected when both the measured turbine gas temperature profile and the measured combustor instability differ from their predicted values by more than respective predetermined thresholds. The data processing arrangement thus corresponds to the method of the first aspect. The data processing arrangement may further include: a computer-readable medium operatively connected to the processors, the medium storing the measured and predicted turbine gas temperature profiles and the measured and predicted combustor instabilities. The data processing arrangement may be part of an engine electronic controller and/or may include the whole or part of a dedicated engine health monitoring control unit.

Optional features of the present disclosure will now be set out.

The combustor instability may be a combustor gas pressure oscillation, such an oscillation is known as "rumble".

The combustor instability may be measured by one or more gas pressure sensors measuring gas pressure in or around the combustor. For example, the pressure sensor(s) may measure the pressure in a combustion chamber of the combustor, and/or in a gas annulus surrounding the combustion chamber. However, more indirect approaches for measuring combustor instability are possible, such as measuring whole engine vibration and extracting a signal due to combustor instability from that vibration, or measuring flame ionisation (as described, for example, in US 2016/363110).

The method may further include: comparing a measured fuel delivery flow number of the combustor fuel system against a predicted fuel delivery flow number of the combustor fuel system; wherein the indication that a fuel delivery fault in the combustor fuel system has been detected occurs when the measured turbine gas temperature profile, the measured combustor instability and the measured fuel delivery flow number differ from their predicted values by more than respective predetermined thresholds. By combining measurement and prediction of fuel delivery flow number with the other measurements and predictions more robust fault determination can be achieved. One or more combustor fuel system fuel pressure sensors may be used in obtaining the measured fuel delivery flow number.

Particularly when measurement and prediction of fuel delivery flow number is included in the method, the indication that a fuel delivery fault has been detected may include identifying the probable location of the fuel delivery fault.

For example, the combustor fuel system may have a manifold which delivers a fuel flow to fuel injectors of the combustor, and the comparison of flow numbers may include comparing a measured against a predicted fuel delivery flow number for fuel flow in the manifold. An identified probable location of the fuel delivery fault may then be the manifold itself, or a fuel injector which receives fuel from the manifold.

When the combustor fuel system has plural manifolds which deliver respective fuel flows to fuel injectors of the combustor, the comparison of flow numbers may include comparing a measured against a predicted fuel delivery flow number for fuel flow in each of the manifolds. In this way, a given fuel delivery fault can be associated with one or other of the manifolds. In particular, the combustor may be a multi-stage combustor having plural fuel injectors, and the combustor fuel system may have pilot and mains fuel manifolds which respectively deliver pilot and mains fuel flows to the injectors for performance of pilot-only and pilot-andmains staging control of the combustor.

The combustor fuel system may further have respective fuel passages from a manifold to the fuel injectors, and the comparison of flow numbers may include comparing a measured against a predicted fuel delivery flow number for fuel flow in each fuel passage. For example, in a combustor fuel system having pilot and mains fuel manifolds, the fuel passages from the mains manifold to the fuel injectors may have respective fuel control valves. Additionally or alternatively, the fuel passages from the pilot manifold to the fuel injectors may have respective fuel control valves. In such cases, the indicated fuel delivery fault can include an indication of a faulty fuel control valve, and preferably a location of the faulty fuel control valve.

The measured fuel delivery flow number may conveniently be based on measurements of: fuel mass flow rate at a given measurement location in the fuel system, fuel pressure at the given measurement location, and combustor inlet pressure.

The measured turbine gas temperature profile may be obtained from an array of temperature sensors (e.g. thermocouples) in the turbine. Typically the array is a circumferential array. Typically, the combustor fuel system delivers fuel to plural fuel injectors of the combustor, and in this case there is preferably at least one temperature sensor for every two of the fuel injectors.

The predicted turbine gas temperature profile and the combustor instability (and the predicted fuel delivery flow number if used) may be obtained from an engine model or models. For example, the predictions of the engine model for gas temperature profile (and the predicted fuel delivery flow number if used) may be based on measurements of engine performance parameters which include at least: the combustor inlet pressure, the combustor inlet temperature, the total fuel mass flow rate delivered to the combustor, a shaft speed of the engine and optionally fuel split if the combustor is a multi-stage. Similarly, the predictions of the engine model for combustor instability may be based on measurements of engine performance parameters which include at least: the combustor inlet pressure, the combustor inlet temperature, the total fuel mass flow rate delivered to the combustor, a shaft speed of the engine and optionally fuel split if the combustor is a multi-stage combustor.

The method may further include: measuring the turbine gas temperature profile and the fuel delivery flow number; and predicting the turbine gas temperature profile and the fuel delivery flow number. When measurement and prediction of fuel delivery flow number is included in the method, it may also further include: measuring the fuel delivery flow number; and predicting the fuel delivery flow number.

Brief Description of the Drawings

Embodiments of the present disclosure will now be described by way of example with reference to the accompanying drawings in which:

Figure 1 shows a longitudinal cross-section through a ducted fan gas turbine engine;

Figure 2 shows schematically a staging system of a lean burn fuel supply system of the engine of Figure 1;

Figure 3 shows schematically a typical plot (solid line) of air/fuel ratio (AFR) against combustor inlet temperature ($T_{30}$) for an engine working line, and a corresponding contour map (dashed lines) of measurable rumble amplitude (thicker dashed lines indicating greater amplitudes);

Figure 4 shows schematically a graph of rumble amplitude against AFR;

Figure 5 shows schematically a longitudinal cross-section through the combustion equipment of the engine of Figure 1; and

Figure 6 is a flow chart showing the work flow of a health monitoring scheme.

Detailed Description and Further Optional Features

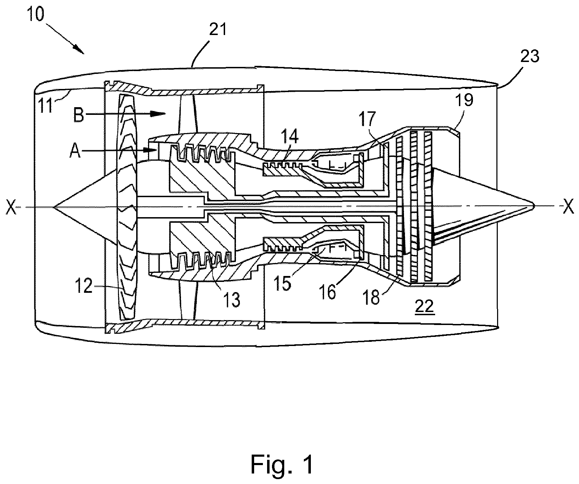

With reference to Figure 1, a ducted fan gas turbine engine is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The engine has a pumping unit comprising a low pressure (LP) pumping stage which draws fuel from a fuel tank of the aircraft and supplies the fuel at boosted pressure to the inlet of a high pressure (HP) pumping stage. The LP stage typically comprises a centrifugal impeller pump while the HP pumping stage may comprise one or more positive displacement pumps, e.g. in the form of twin pinion gear pumps. The LP and HP stages are typically connected to a common drive input, which is driven by the engine HP or IP shaft via an engine accessory gearbox.

A lean burn fuel supply system then accepts fuel from the HP pumping stage for feeds to the combustor 15 of the engine 10. This system typically has a hydro-mechanical unit (HMU) comprising a fuel metering valve operable to control the rate at which fuel is allowed to flow to the combustor. The HMU further typically comprises: a pressure drop control arrangement (such as a spill valve and a pressure drop control valve) which is operable to maintain a substantially constant pressure drop across the metering valve, and a pressure raising and shut-off valve at the fuel exit of the HMU which ensures that a predetermined minimum pressure level is maintained upstream thereof for correct operation of any fuel pressure operated auxiliary devices (such as variable inlet guide vane or variable stator vane actuators) that receive fuel under pressure from the HMU. Further details of such an HMU are described in EP 2339147 A.

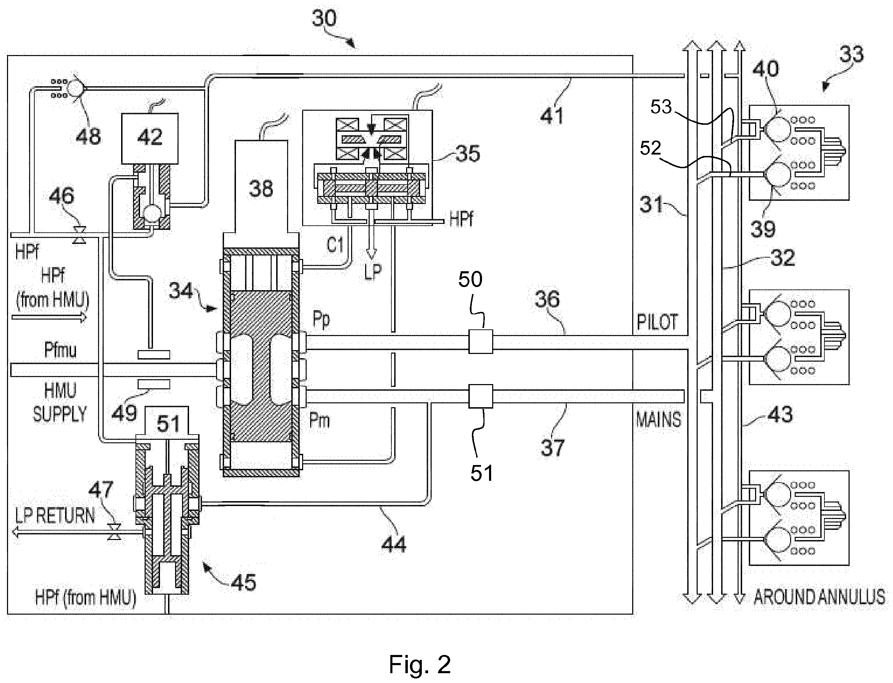

An engine electronic controller (EEC - not shown) commands the HMU fuel metering valve to supply fuel to the combustor at a given flow rate. The metered fuel flow leaves the HMU and arrives at a staging system 30, shown schematically in Figure 2, at a pressure $P_{fmu}$.

The staging system 30 splits the fuel under the control of the EEC into two flows: one at a pressure $P_p$ for a pilot manifold 31 and the other at a pressure $P_m$ for a mains manifold 32. The pilot manifold feeds pilot nozzles of a number of fuel injectors 33 of the combustor. The mains manifold feeds secondary nozzles of the fuel injectors. Pilot fuel flow scheduling valves (FSVs) 39 and mains FSVs 40 at the injectors prevent combustion chamber gases entering the respective manifolds. By varying the fuel split between the manifolds, the EEC can thus perform staging control of the engine.

In more detail, the staging system 30 has a fuel flow splitting valve (FFSV) 34, which receives the metered fuel flow from the HMU at pressure $P_{fmu}$. A spool is slidable within the FFSV under the control of a servo valve 35, the position of the spool determining the outgoing flow split between a pilot connection pipe 36 which delivers fuel to the pilot manifold 31 and a mains connection pipe 37 which delivers fuel to the mains manifold 32. The spool can be positioned so that the mains stage is deselected, with the entire metered flow going to the pilot stage. An LVDT 38 provides feedback on the position of the spool to the EEC, which in turn controls staging by control of the servo valve.

The staging system 30 also has a recirculation line to provide the mains manifold 32 with a cooling flow of fuel when mains manifold is deselected. The recirculation line has a delivery section including a delivery pipe 41 which receives the cooling flow from a fuel recirculating control valve (FRCV) 42, and a recirculation manifold 43 into which the delivery pipe feeds the cooling flow. The recirculation manifold has feeds which introduce the cooling flow from the recirculation manifold to the mains manifold via connections to the feeds from the mains manifold to the mains FSVs 40.

The recirculation line also has a return section which collects the returning cooling flow from the mains manifold 32. The return section is formed by a portion of the mains connection pipe 37 and a branch pipe 44 from the mains connection pipe, the branch pipe extending to a recirculating flow return valve (RFRV) 45 from whence the cooling flow exits the recirculation line.

The cooling flow for the recirculation line is obtained from the HMU at a pressure $HP_f$ via a cooling flow orifice 46. On leaving the RFRV 45 via a pressure raising orifice 47, the cooling flow is returned at a pressure $P_{lp}$ to the pumping unit for re-pressurisation by the HP pumping stage. A check valve 48 limits the maximum pressure in the recirculation line. The HMU also supplies fuel at pressure $HP_f$ for operation of the servo valve 35 and the RFRV 45. The FRCV 42 and the RFRV 45 are operated under the control of the EEC.

When mains is staged in, a cooling flow is also directed through the recirculation manifold 43 to avoid coking therein. More particularly a small bypass flow is extracted from the HMU's metered fuel flow at pressure $P_{fmu}$. The bypass flow is sent via a flow washed filter 49 to a separate inlet of the FRCV 42, and thence through the delivery pipe 41 to the recirculation manifold 43. The bypass flow exits the recirculation manifold to rejoin the mains fuel flow at the injectors 33.

The engine 10 has a fuel supply system health monitoring (HM) scheme that uses a combination of engine operating parameters, turbine gas temperature (TGT) profiles, and optionally fuel system pressures to provide deterministic detection of fuel control system faults, such as blockage or stiction of a pilot FSV 39 or a mains FSV 40. The HM scheme is implemented as a data processing arrangement that may include a sub-unit of the EEC, and/or may include the whole or part of a dedicated HM control unit.

Specifically, the HM scheme monitors the level of pressure instability in the combustor, commonly referred to as "rumble". The amount of rumble is determined by engine performance parameters, such as the combustor inlet pressure ($P_{30}$), the combustor inlet temperature ($T_{30}$) and the air/fuel ratio (AFR). In the case of a lean burn fuel supply system, the fuel split ((pilot fuel flow rate/WFE):(mains fuel flow rate/WFE), where WFE is total fuel flow rate) also impacts on combustion rumble. The AFR can be determined from $P_{30}$, $T_{30}$, WFE, and the high-pressure shaft speed (NH). Thus:

$$\text{Combustor Rumble} = f(P_{30}, T_{30}, \text{WFE}, \text{NH}, \text{fuel split})$$

The rumble response, sometimes referred to as a rumble map, is system specific, i.e. it differs between different engine types.

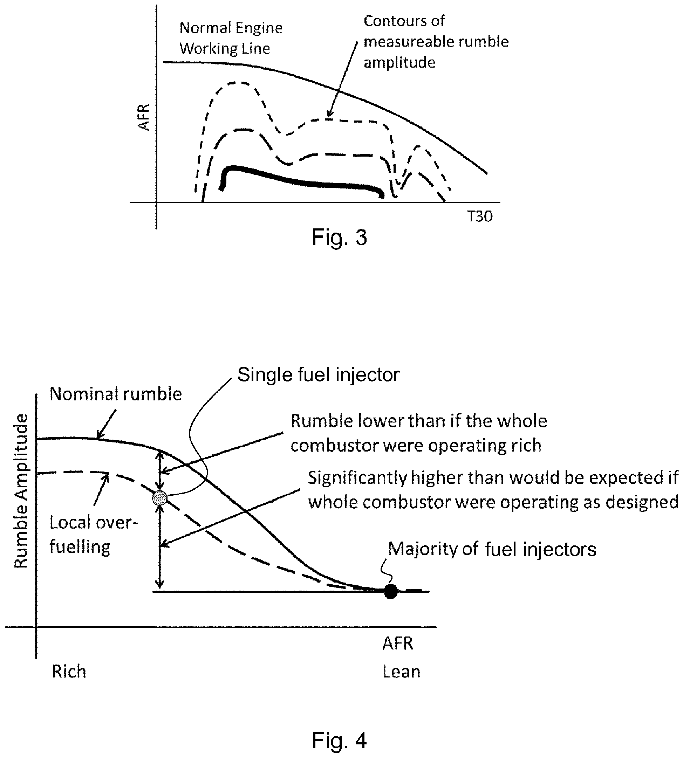

In normal operation, at a given operating point, the combustor has a given rumble characteristic. The rumble frequency is primarily a function of $T_{30}$ (noting that $T_{30}$ correlates with NH) and the amplitude is a function of AFR (and fuel split). In general, for a given engine type the rumble amplitude response varies from engine unit to engine unit, although the frequency response is consistent across units of a given type. Figure 3 shows schematically a typical plot (solid line) of AFR against $T_{30}$ for an engine working line, and a corresponding contour map (dashed lines) of measurable rumble amplitude (thicker dashed lines indicating greater amplitudes).

Combustion testing with non-uniform fuel distribution demonstrates that if a single sector, or portion of the combustor, has a local AFR within a high rumble region then the rest of the combustor will rumble as if the whole combustor was operating at that AFR. As such, it is possible to determine if the combustor is locally over-fuelled (or fuelled such that it is in a high rumble region) by measuring the whole combustor rumble response.

A non-uniform fuel distribution into the combustor results in a non-uniform temperature distribution at the turbine inlet. This can present numerous issues, such as turbine forcing. However, the most serious risk it poses is through a local increase in the temperature of the gases passing through the cooled turbine stages and reaching the uncooled turbine stages. These uncooled stages are generally more susceptible to sustaining damage caused by a hot streak from the combustor than the cooled stages. Moreover, damage to the uncooled stages can be particularly harmful since these parts of the engine, in many engine architectures, carry services such as oil, which if exposed to turbine gases could lead to a hazardous event. However, a severely non-uniform temperature distribution, e.g. caused by a complete FSV failure, can result in damage to both cooled and uncooled stages of the turbine.

Despite the above-mentioned cooling flows, the hot fuel within the fuel supply system and the injectors 33 presents a risk of coking. This thermal decomposition of the fuel into insoluble carbon based particulate can lead to blockages in fuel passages, either through deposition on the fuel injector fuel passages, or through spalling of deposition generated in the fuel manifolds 31, 32. In addition, there is a potential risk to the FSVs 39, 40 developing stiction through reduced clearances in moving parts. The stiction can cause an FSV to schedule fuel incorrectly, either by failing to close as fuel pressure reduces, or by failing to open as fuel pressure increases. However, in addition, an FSV may fail to open or close correctly due to mechanical failure. Depending on the failure state, a failed FSV passes higher or lower rates of fuel flow relative to the other FSVs, and therefore can lead to a non-uniform circumferential distribution of fuel entering the combustor. Coking of the fuel system also typically results in a non-uniform circumferential distribution of fuel flow/pressure around the fuel system.

Figure 4 shows schematically a graph of rumble amplitude against AFR to illustrate how rumble monitoring can be used to identify a fuel delivery fault. If all the fuel injectors are operating at a lean burn AFR they might be expected to produce a low rumble amplitude. However, a single fuel injector producing local over-fuelling has a locally richer AFR, and thus causes a higher rumble amplitude. Nonetheless, the increased rumble amplitude is less than might be expected if all the injectors were operating at the richer AFR.

Accordingly, the divergence from the engine's predicted rumble response can be used to indicate a fuel delivery fault.

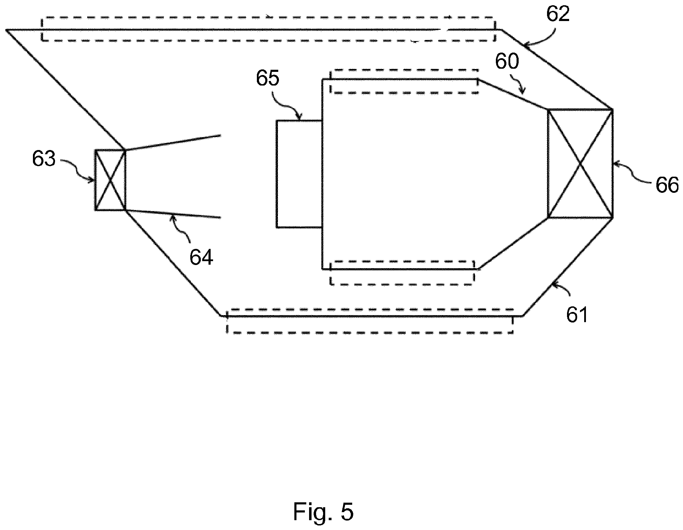

Figure 5 shows schematically a longitudinal cross-section through the combustion equipment 15 of the engine of Figure 1. The combustion equipment has a combustor 60, and inner annulus casing 61, and an outer annulus casing 62. Compressed air at $P_{30}$, $T_{30}$ enters the equipment via high-pressure compressor outlet guide vanes 63 and pre-diffuser 64. Fuel enters the combustor through fuel spray nozzles 65 of the fuel injectors 33. The hot combustion products exit the equipment via high-pressure turbine nozzle guide vanes 66. Possible locations on the combustor and inner and outer annulus casings for dynamic pressures transducers to measure rumble are indicated by dashed outlines.

Although the pressures transducers can be used to measure a change in rumble from expected, of itself such a change may not be enough to adequately determine the occurrence of a fuel delivery fault.

Accordingly, as mentioned above, the HM scheme combines the measurement of rumble with measurement of turbine temperature profiles to provide more deterministic detection.

In particular, the engine 10 also has temperature instrumentation capable of detecting a non-uniform fuel distribution through anomalies in the TGT profile.

The TGT profile can be measured, for example, by arrangements of thermocouples, as discussed for example in US 2009/046762 or US 9297707. The thermocouples can be located, for example, within the internal cavities of nozzle guide vanes at the entrance of the low-pressure turbine 18. However, any suitable location in the turbine can be used and, generally, the further upstream towards the combustor the better for relating the temperatures measured by the thermocouples to combustor temperatures.

Preferably at least one temperature measurement location is provided for every two fuel injectors 33. However, additional measurement locations can be provided to improve diagnostic accuracy.

The HM unit predicts an expected TGT profile across the turbine gas path and an expected rumble. The TGT profile prediction can be performed, for example, by a suitable engine thermodynamic model which bases its predictions on e.g. the following measured or synthetic engine performance parameters:

- $T_{30}$
- $P_{30}$
- WFE
- Fuel split (required for a lean burn system application)
- NH

The expected rumble can be determined from a suitable rumble map using $T_{30}$, $P_{30}$, fuel split and AFR. The HM unit uses the predicted TGT profile and rumble in combination with the corresponding measured values to detect if deviation from the predicted TGT correlates with variations in rumble for a given condition. Such information can then be used to determine an appropriate type of servicing to rectify the issue. In particular, core engine mounted architectures such as fuel manifolds and injectors require a large number of externals to be removed before they can be accessed.

Therefore, if the root cause of an anomaly can be identified at the outset of maintenance the amount of disruption for the engine operator can be reduced. Also if a fault is detected before it becomes a significant operational or safety issue, maintenance can be scheduled sufficiently in advance to reduce impact on the operator.

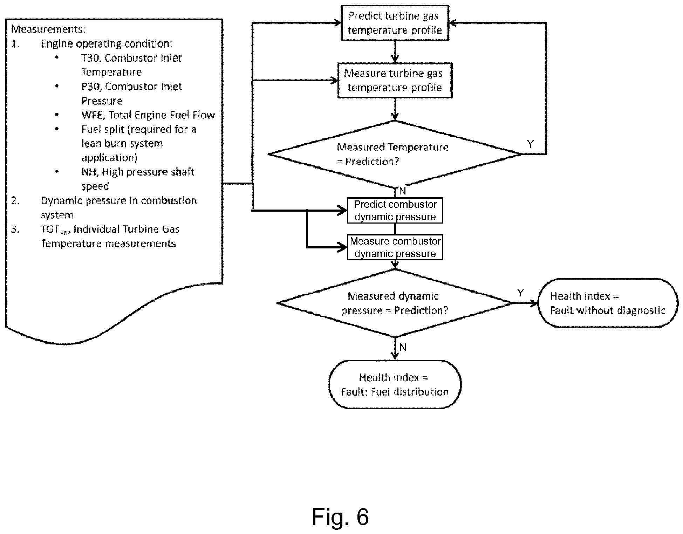

Figure 6 is a flow chart showing the work flow of the HM scheme. In summary:

- A prediction of temperature distribution across the turbine gas path is generated by applying measured or synthetic engine operating parameters to an engine model.
- TGT profile is measured using suitably positioned thermocouples.
- If the measured TGT differs from the predicted TGT by more than a threshold, then a fault is enunciated, a prediction of rumble is generated by applying the measured engine operating parameters to the rumble map, and a corresponding measurement of rumble is taken.
- If the measured rumble is effectively equal to the corresponding predicted rumble, then the fault is not diagnosed. Such an undiagnosed fault can be flagged for human review or sent for further automated model fitting
- However, if a measured rumble differs from the corresponding predicted rumble by more than a threshold, then a fuel distribution fault is identified. Maintenance action can then be scheduled to rectify the issue or advice is given to the engine operator to extend the operational window before maintenance action is required.

The comparison between the predicted and measured TGT profiles and detection of a maldistribution therein can be based on a trained model of the engine (either fleet or engine specific). An advantage of such an approach is that any change in shaft speed, $P_{30}$, $T_{30}$, WFE or fuel split can be accounted for in the model before the rumble comparison.

More generally, although described above in terms of explicit comparisons of predicted and measured values relative to thresholds, the comparison and thresholding analysis of the HM scheme can be performed implicitly, for example using a neural network or similarly trained model which accepts the TGT and rumble measurements and predictions as inputs to the neural network and provides fault indices as outputs. Indeed, this can be taken a step further by representing the engine model and the rumble map as a surrogate model, in the form of a neural network (e.g. using the approach of S. King et al. (ibid.)), such that the inputs to the network are: the measured engine operating parameters used to predict TGT and rumble, the measured TGT, and the measured rumble.

Other approaches can be used for measuring combustor instability. For example, casing or whole engine vibration measurements can provide the input for the rumble detection. However, if such vibration measurements are used, then the vibration signal will generally have a larger noise floor and require further filtering and processing to remove measurements relating to turbomachinery rather than rumble. Another example is to use flame ionisation (as a described in US 2016/363110) to detect dynamic pressure measurements.

To provide more robust deterministic fault prediction, the HM scheme can be combined with measurements of fuel flow number for fuel flow to fuel injectors 33. Specifically, the HM scheme monitors the pressure in the pilot manifold 31 and the mains manifold 33 via respective pilot 50 and mains 51 pressure sensors (see Figure 2) on those manifolds or the pilot 36 and mains 37 connection pipes to the manifolds (but downstream of any low-pressure returns or fuel system hardware on the connection pipes).

The fuel delivery through the pilot 31 or the mains 33 manifold has a characteristic flow number, defined by the mass flow rate of fuel for a given pressure drop from the fuel supply to the combustor.

$$Flow\ Number = \frac{\dot{m}}{\sqrt{\Delta P}}$$

where $\Delta P = P_{fuel} - P_{30}$; $\dot{m}$ = fuel mass flow rate, $P_{fuel}$ is the respective fuel pressure as measured by the pilot 50 or mains 51 pressure sensor.

The flow number changes with operating point due to the action of the respective FSVs 39, 40. In a rich burn combustion system the fuel injectors would have weight distributors installed at the inlet to each injector which would similarly change flow number (i.e. reduce it at low flow conditions) to provide a uniform circumferential fuel distribution into the combustor.

Any change in FSV stiction, or to the size of the smaller diameter fuel passages which meter fuel flow through the injectors, results in a change in the pressure required to pass a given mass flow of fuel, and hence leads to a change in flow number. The pilot 50 and mains 51 pressure sensors allow this change to be monitored on an overall manifold flow number basis. However, if further pressure sensors are additionally or alternatively installed at the respective pilot 52 and mains 53 fuel passages of each injector, the change can be monitored on an individual FSV basis, allowing not just the occurrence, but the location and/or the severity of an FSV fault to be detected. For example, if a single fuel injector has a mains FSV stuck partially open the resultant hot spot will be more severe than multiple injectors with mains FSVs leaking slightly, although the overall change in manifold flow number would be the same.

Although the fuel delivery flow number part of the scheme typically requires knowledge of the normal behaviour at a given operating condition of fuel delivery pressure ($P_{fuel}$), this can be readily determined during a training phase of the engine model.

Although the HM unit may determine the fault state on wing, another option is for the unit merely to collect the necessary measurements, which are then processed to determine the fault state using a ground-based system.

Advantageously, the HM scheme provides a useful cross-check against a measured temperature distribution in the turbine, and thus enables a more deterministic identification that a given fault is e.g. under or over-scheduling of fuel. This is because it can distinguish between an overboard fuel leakage or other fault, which could cause the pressure in the recirculation line to drop.

The scheme is also compatible with long term trending, which is helpful for monitoring failure modes such as coking related failure mechanisms, which tend to develop over time. Another advantage is that the scheme can be used to identify a fault in the pilot fuel delivery flow as either (or both) pilot and mains fuel delivery pressures (hence flow numbers) can be monitored, depending on the level of instrumentation.

Embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

As disclosed herein, the term "computer readable medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While the invention has been described in conjunction with the exemplary embodiments described above, many modifications will be apparent to those skilled in the art when given this disclosure. Accordingly, the exemplary embodiments of the invention set forth above are considered to be illustrative and not limiting. Various changes to the described embodiments may be made without departing from the scope of the invention as defined by the appended claims.

## Claims

1. A method of determining a fuel delivery fault in a gas turbine engine (10) having a combustor (60), a combustor fuel system for delivering fuel to the combustor, and a turbine which is driven by hot gas from the combustor, the method including:

   measuring a turbine gas temperature profile, predicting a turbine gas temperature profile and comparing the measured turbine gas temperature profile against the predicted turbine gas temperature profile;
   measuring a combustor instability, predicting a combustor instability and comparing the measured combustor instability against the predicted combustor instability; and
   indicating that a fuel delivery fault in the combustor fuel system has been detected when both the measured turbine gas temperature profile and the measured combustor instability differ from their predicted values by more than respective predetermined thresholds.

2. A method according to claim 1, wherein the combustor instability is a combustor gas pressure oscillation.

3. A method according to claim 2, wherein the measured combustor instability is combustor pressure oscillation amplitude.

4. A method according to any one of the preceding claims, wherein the combustor instability is measured by one or more gas pressure sensors measuring gas pressure in or around the combustor.

5. A method according to any one of the previous claims, which further includes:

comparing a measured fuel delivery flow number of the combustor fuel system against a predicted fuel delivery flow number of the combustor fuel system;
wherein the indication that a fuel delivery fault in the combustor fuel system has been detected occurs when the measured turbine gas temperature profile, the measured combustor instability and the measured fuel delivery flow number differ from their predicted values by more than respective predetermined thresholds.

6. A method according to claim 5, wherein the combustor fuel system has a manifold (31, 32) which delivers a fuel flow to fuel injectors (33,) of the combustor, and the comparison of flow numbers includes comparing a measured against a predicted fuel delivery flow number for fuel flow in the manifold.

7. A method according to any one of the previous claims, wherein the measured turbine gas temperature profile is obtained from an array of temperature sensors in the turbine.

8. A method according to claim 7, wherein the combustor fuel system delivers fuel to plural fuel injectors (33,) of the combustor, and there is at least one temperature sensor for every two of the fuel injectors.

9. A method according to any one of the previous claims, wherein the predicted turbine gas temperature profile and the predicted combustor instability are obtained from an engine model or models.

10. A method according to claim 9, wherein the predictions of the engine model(s) are based on measurements of engine performance parameters which include at least: the combustor inlet pressure, the combustor inlet temperature, the total fuel mass flow rate delivered to the combustor, and a shaft speed of the engine.

11. A health monitoring system comprising:

a data processing arrangement comprising one or more processors adapted to perform the method of any one of claims 1 to 10;
an array of temperature sensors for obtaining the measured turbine gas temperature profile; and
one or more sensors for use in obtaining the combustor instability.

12. A gas turbine engine having the health monitoring system of claim 11.

13. A computer program comprising code which, when the code is executed on the data processing arrangement of the gas turbine engine of claim 12, causes the one or more processors to perform the method of any one of claims 1 to 10.

14. A computer readable medium storing a computer program comprising code which, when the code is executed on the data processing arrangement of the gas turbine engine of claim 12, causes the one or more processors to perform the method of any one of claims 1 to 10.

**Patentansprüche**

1. Verfahren zum Bestimmen eines Kraftstoffzufuhrfehlers in einem Gasturbinentriebwerk (10), das eine Brennkammer (60), ein Brennkammerkraftstoffsystem zum Zuführen von Kraftstoff zu der Brennkammer und eine Turbine aufweist, die durch heißes Gas aus der Brennkammer angetrieben wird, wobei das Verfahren Folgendes beinhaltet:

Messen eines Turbinengastemperaturprofils, Vorhersagen eines Turbinengastemperaturprofils und Vergleichen des gemessenen Turbinengastemperaturprofils mit dem vorhergesagten Turbinengastemperaturprofil;
Messen einer Brennkammerinstabilität, Vorhersagen einer Brennkammerinstabilität und Vergleichen der gemessenen Brennkammerinstabilität mit der vorhergesagten Brennkammerinstabilität; und

Angeben, dass ein Kraftstoffzufuhrfehler in dem Brennkammerkraftstoffsystem erfasst worden ist, wenn sowohl das gemessene Turbinengastemperaturprofil als auch die gemessene Brennkammerinstabilität von ihren vorhergesagten Werten um mehr als entsprechende vorbestimmte Schwellenwerte abweichen.

2. Verfahren nach Anspruch 1, wobei die Brennkammerinstabilität eine Brennkammergasdruckoszillation ist.

3. Verfahren nach Anspruch 2, wobei die gemessene Brennkammerinstabilität Brennkammerdruckoszillationsamplitude ist.

4. Verfahren nach einem der vorhergehenden Ansprüche, wobei die Brennkammerinstabilität durch einen oder mehrere Gasdrucksensoren gemessen wird, die Gasdruck in oder um die Brennkammer messen.

5. Verfahren nach einem der vorhergehenden Ansprüche, das ferner Folgendes beinhaltet:

Vergleichen einer gemessenen Kraftstoffzufuhrströmungszahl des Brennkammerkraftstoffsystems mit einer vorhergesagten Kraftstoffzufuhrströmungszahl des Brennkammerkraftstoffsystems; wobei die Angabe, dass ein Kraftstoffzufuhrfehler in dem Brennkammerkraftstoffsystem erfasst worden ist, auftritt, wenn das gemessene Turbinengastemperaturprofil, die gemessene Brennkammerinstabilität und die gemessene Kraftstoffzufuhrströmungszahl von ihren vorhergesagten Werten um mehr als jeweilige vorbestimmte Schwellenwerte abweichen.

6. Verfahren nach Anspruch 5, wobei das Brennkammerkraftstoffsystem einen Verteiler (31, 32) aufweist, der Kraftstoffeinspritzvorrichtungen (33,) der Brennkammer eine Kraftstoffströmung zuführt, und der Vergleich von Strömungszahlen das Vergleichen einer gemessenen mit einer vorhergesagten Kraftstoffzufuhrströmungszahl für Kraftstoffströmung in dem Verteiler beinhaltet.

7. Verfahren nach einem der vorhergehenden Ansprüche, wobei das gemessene Turbinengastemperaturprofil von einer Reihe von Temperatursensoren in der Turbine erhalten wird.

8. Verfahren nach Anspruch 7, wobei das Brennkammerkraftstoffsystem mehreren Kraftstoffeinspritzvorrichtungen (33,) der Brennkammer Kraftstoff zuführt und es zumindest einen Temperatursensor für je zwei der Kraftstoffeinspritzvorrichtungen gibt.

9. Verfahren nach einem der vorhergehenden Ansprüche, wobei das vorhergesagte Turbinengastemperaturprofil und die vorhergesagte Brennkammerinstabilität von einem Triebwerksmodell oder Triebwerksmodellen erhalten werden.

10. Verfahren nach Anspruch 9, wobei die Vorhersagen des Triebwerksmodells (der Triebwerksmodelle) auf Messungen von Triebwerksleistungsparametern basieren, die zumindest Folgendes beinhalten: den Brennkammereinlassdruck, die Brennkammereinlasstemperatur, die Gesamtkraftstoffmassenströmungsrate, welche der Brennkammer zugeführt wird, und eine Wellendrehzahl des Triebwerks.

11. Gesundheitsüberwachungssystem, umfassend:

eine Datenverarbeitungsanordnung, die einen oder mehrere Prozessoren umfasst, die ausgelegt sind, um das Verfahren nach einem der Ansprüche 1 bis 10 durchzuführen; eine Reihe von Temperatursensoren zum Erhalten des gemessenen Turbinengastemperaturprofils; und einen oder mehrere Sensoren zur Verwendung beim Erhalten der Brennkammerinstabilität.

12. Gasturbinentriebwerk, welches das Gesundheitsüberwachungssystem nach Anspruch 11 aufweist.

13. Computerprogramm, das Code umfasst, der, wenn der Code auf der Datenverarbeitungsanordnung des Gasturbinentriebwerks nach Anspruch 12 ausgeführt wird, den einen oder die mehreren Prozessoren veranlasst, das Verfahren nach einem der Ansprüche 1 bis 10 durchzuführen.

14. Computerlesbares Medium, das ein Computerprogramm speichert, das Code umfasst, der, wenn der Code auf der Datenverarbeitungsanordnung des Gasturbinentriebwerks nach Anspruch 12 ausgeführt wird, den einen oder die mehreren Prozessoren veranlasst, das Verfahren nach einem der Ansprüche 1 bis 10 durchzuführen.

**EP 3 434 877 B1**

**Revendications**

1. Procédé de détermination d'un défaut de distribution de carburant dans un moteur à turbine à gaz (10) ayant une chambre de combustion (60), un système de carburant de chambre de combustion pour délivrer le carburant à la chambre de combustion, et une turbine qui est entraînée par des gaz chauds provenant de la chambre de combustion, le procédé comprenant :

   la mesure d'un profil de température de gaz de turbine, la prédiction d'un profil de température de gaz de turbine et la comparaison du profil de température des gaz de turbine mesuré au profil de température des gaz de turbine prédit ;
   la mesure d'une instabilité de chambre de combustion, la prédiction d'une instabilité de chambre de combustion et la comparaison de l'instabilité de chambre de combustion mesurée à l'instabilité de chambre de combustion prédite ; et
   l'indication qu'un défaut de distribution de carburant dans le système de carburant de chambre de combustion a été détecté lorsqu'à la fois le profil de température des gaz de turbine mesuré et
   l'instabilité de chambre de combustion mesurée diffèrent de leurs valeurs prédites de plus que des seuils prédéterminés respectifs.

2. Procédé selon la revendication 1, dans lequel l'instabilité de chambre de combustion est une oscillation de la pression des gaz de la chambre de combustion.

3. Procédé selon la revendication 2, dans lequel l'instabilité de chambre de combustion mesurée est l'amplitude d'oscillation de la pression de la chambre de combustion.

4. Procédé selon l'une quelconque des revendications précédentes, dans lequel l'instabilité de chambre de combustion est mesurée par un ou plusieurs capteurs de pression de gaz mesurant la pression de gaz dans ou autour de la chambre de combustion.

5. Procédé selon l'une quelconque des revendications précédentes, comprenant en outre :

   la comparaison d'un nombre mesuré du débit de distribution de carburant du système de carburant de chambre de combustion à un nombre prédit du débit de distribution de carburant du système de carburant de chambre de combustion ;
   dans lequel l'indication qu'un défaut de distribution de carburant dans le système de carburant de chambre de combustion a été détecté se produit lorsque le profil de température des gaz de turbine mesuré, l'instabilité de chambre de combustion mesurée et le nombre mesuré du débit de distribution de carburant diffèrent de leurs valeurs prédites de plus que des seuils prédéterminés respectifs.

6. Procédé selon la revendication 5, dans lequel le système de carburant de chambre de combustion comporte un collecteur (31, 32) qui délivre un débit de carburant aux injecteurs de carburant (33,) de la chambre de combustion, et la comparaison des nombres de débit comprend la comparaison d'un nombre mesuré du débit de distribution de carburant à un nombre prédit de celui-ci pour le débit de carburant dans le collecteur.

7. Procédé selon l'une quelconque des revendications précédentes, dans lequel le profil de température des gaz de turbine mesuré est obtenu à partir d'un réseau de capteurs de température dans la turbine.

8. Procédé selon la revendication 7, dans lequel le système de carburant de chambre de combustion délivre du carburant à plusieurs injecteurs de carburant (33,) de la chambre de combustion, et il y a au moins un capteur de température pour un injecteur de carburant sur deux.

9. Procédé selon l'une quelconque des revendications précédentes, dans lequel le profil de température de gaz de turbine prédit et l'instabilité de chambre de combustion prédite sont obtenus à partir d'un ou plusieurs modèles de moteur.

10. Procédé selon la revendication 9, dans lequel les prédictions du ou des modèle(s) de moteur sont basées sur des mesures de paramètres de performance du moteur qui comprennent au moins : la pression d'entrée de la chambre de combustion, la température d'entrée de la chambre de combustion, le débit massique total de carburant délivré à la chambre de combustion, et une vitesse d'arbre du moteur.

13

**11.** Système de surveillance de santé comprenant :

un agencement de traitement de données comprenant un ou plusieurs processeurs adaptés pour exécuter le procédé selon l'une quelconque des revendications 1 à 10 ;
un réseau de capteurs de température pour obtenir le profil de température des gaz de turbine mesuré ; et
un ou plusieurs capteurs destinés à être utilisés pour obtenir l'instabilité de chambre de combustion.

**12.** Moteur à turbine à gaz possédant le système de surveillance de santé selon la revendication 11.

**13.** Programme informatique comprenant un code qui, lorsque le code est exécuté sur l'agencement de traitement de données du moteur à turbine à gaz selon la revendication 12, amène l'un ou plusieurs processeurs à exécuter le procédé selon l'une quelconque des revendications 1 à 10.

**14.** Support lisible par ordinateur stockant un programme informatique comprenant un code qui, lorsque le code est exécuté sur l'agencement de traitement de données du moteur à turbine à gaz selon la revendication 12, amène l'un ou plusieurs processeurs à exécuter le procédé selon l'une quelconque des revendications 1 à 10.

Fig. 1

Fig. 2

EP 3 434 877 B1

Fig. 3

Fig. 4

Fig. 5

Measurements:
1. Engine operating condition:
   - T30, Combustor Inlet Temperature
   - P30, Combustor Inlet Pressure
   - WFE, Total Engine Fuel Flow
   - Fuel split (required for a lean burn system application)
   - NH, High pressure shaft speed
2. Dynamic pressure in combustion system
3. $TGT_{i-n}$, Individual Turbine Gas Temperature measurements

Predict turbine gas temperature profile

Measure turbine gas temperature profile

Measured Temperature = Prediction?    Y

N

Predict combustor dynamic pressure

Measure combustor dynamic pressure

Measured dynamic pressure = Prediction?    Y    Health index = Fault without diagnostic

N

Health index = Fault: Fuel distribution

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2469057 A
- US 20160245524 A
- US 2009046762 A
- US 9297707 B
- US 2004079070 A
- US 8200410 B
- EP 2886958 A
- US 2016363110 A
- EP 2339147 A

### Non-patent literature cited in the description

- **S. KING et al.** Anomaly Detection of Combustor Systems in Support of Unmanned Air Vehicle Applications. *6th International Conference on Condition Monitoring and Machinery Failure Prevention Technologies,* 2009, vol. 2, 694-705